**Europäisches Patentamt**

**European Patent Office**

**Office européen des brevets**

(19)

(11) Numéro de publication: **0 187 591**
**B1**

(12)

# FASCICULE DE BREVET EUROPEEN

(45) Date de publication du fascicule du brevet:
**01.06.88**

(51) Int. Cl.⁴: **B 62 D 5/08**

(21) Numéro de dépôt: **85402531.9**

(22) Date de dépôt: **18.12.85**

(54) **Distributeur hydraulique rotatif pour servomécanisme.**

(30) Priorité: **11.01.85 FR 8500369**

(43) Date de publication de la demande:
**16.07.86 Bulletin 86/29**

(45) Mention de la délivrance du brevet:
**01.06.88 Bulletin 88/22**

(84) Etats contractants désignés:
**DE GB IT**

(56) Documents cités:
**EP - A - 0 053 559**
**EP - A - 0 072 712**
**DE - A - 3 302 001**
**FR - A - 2 160 548**
**US - A - 4 037 620**

(73) Titulaire: **BENDIX France, 126, rue de Stalingrad,**
**F-93700 Drancy (FR)**

(72) Inventeur: **Kervagoret, Gilbert, 5, Impasse Nobleterre,**
**F-95100 Argenteuil (FR)**

(74) Mandataire: **Le Moenner, Gabriel et al, Division**
**Technique Service Brevets Bendix Europe 126, rue de**
**Stalingrad, F-93700 Drancy (FR)**

# Description

La présente invention concerne les distributeurs hydrauliques rotatifs pour servo-mécanisme, notamment pour systèmes de servodirection de véhicules, du type comprenant un élément de distributeur externe cylindrique monté à rotation dans un alésage d'un boîtier; un élément de distributeur interne cylindrique monté dans un alésage interne de l'élément de distributeur externe et susceptible d'une rotation relative limitée par rapport à ce dernier de part et d'autre d'une position relative neutre; les éléments de distributeur comprenant des ouvertures et cavités définissant mutuellement un circuit de circulation de fluide connectable entre une source de fluide sous pression et un réservoir, et incluant des passages de fluide à section variable pour alimenter sélectivement en fluide sous pression les chambres opposées d'un moteur hydraulique; l'élément de distributeur interne comprenant, à sa périphérie, des rainures longitudinales angulairement réparties; l'élément de distributeur externe comprenant des orifices d'entrée traversants et des évidements de retour, débouchant respectivement en regard de portées lisses de l'élément de distributeur interne entre deux rainures adjacentes, et des orifices de distribution traversants communiquant normalement avec des rainures correspondantes parmi lesdites rainures de l'élément de distributeur interne.

Un distributeur hydraulique rotatif de ce type est décrit dans le document EP-A-0 072 712. Dans le distributeur de ce document, les évidements de retour, dans l'élément de distributeur externe, sont constitués de perçages borgnes ou de perçages traversants obturés par des inserts, la totalité du fluide hydraulique retournant vers le réservoir, à partir de ces évidements de retour, via des conduits de retour ménagés dans l'élément de distributeur interne et débouchant au droit des portées lisses de ce dernier correspondant aux évidements de retour.

Quoique offrant par ailleurs toute satisfaction, un distributeur de ce type s'avère relativement délicat à réaliser et donne lieu le plus souvent à des bruits de fonctionnement d'origine hydraulique difficiles à résorber.

La présente invention a pour objet de proposer un distributeur hydraulique rotatif du type précité de réalisation simple et robuste, de coûts de fabrication et de montage réduits avec un faible niveau de bruits de fonctionnement.

Pour ce faire, selon une caractéristique de l'invention, les évidements de retour de l'élément de distributeur externe sont décalés longitudinalement et angulairement des orifices d'entrée de ce dernier, des premiers parmi ces évidements de retour communiquant en permanence avec une chambre annulaire en bout de l'élément de distributeur externe délimitée intérieurement par l'élément de distributeur interne via des conduits de retour définis au moins partiellement dans l'élément de distributeur externe.

Selon une caractéristique plus particulière de l'invention, les évidements de retour sont constitués de perçages radiaux traversants formés dans une extrémité amincie de l'élément de distributeur externe sur laquelle est rapporté extérieurement un manchon cylindrique faisant avantageusement partie d'un capuchon en forme de coupelle coiffant cette extrémité amincie de l'élément de distributeur externe et définissant partiellement, intérieurement, lesdits conduits de retour.

Un tel agencement permet, d'une part, d'éviter les opérations fastidieuses et délicates de rebouchage par des inserts des évidements de retour, l'ensemble capuchon/manchon réalisant un trajet de conduit de retour en chicane formant un silencieux efficace.

D'autres caractéristiques et avantages ressortiront de la description suivante d'un mode réalisation, donné à titre illustratif mais nullement limitatif, faite en relation avec les dessins annexés, sur lesquels:

— la Figure 1 est une vue en coupe longitudinale schématique d'un distributeur hydraulique rotatif selon l'invention; et

— la Figure 2 est une vue schématique développée du circuit de circulation de fluide formé par les ouvertures et cavités des éléments de distributeur de la Figure 1 (en traits pleins pour l'élément interne, en traits pointillés pour l'élément externe).

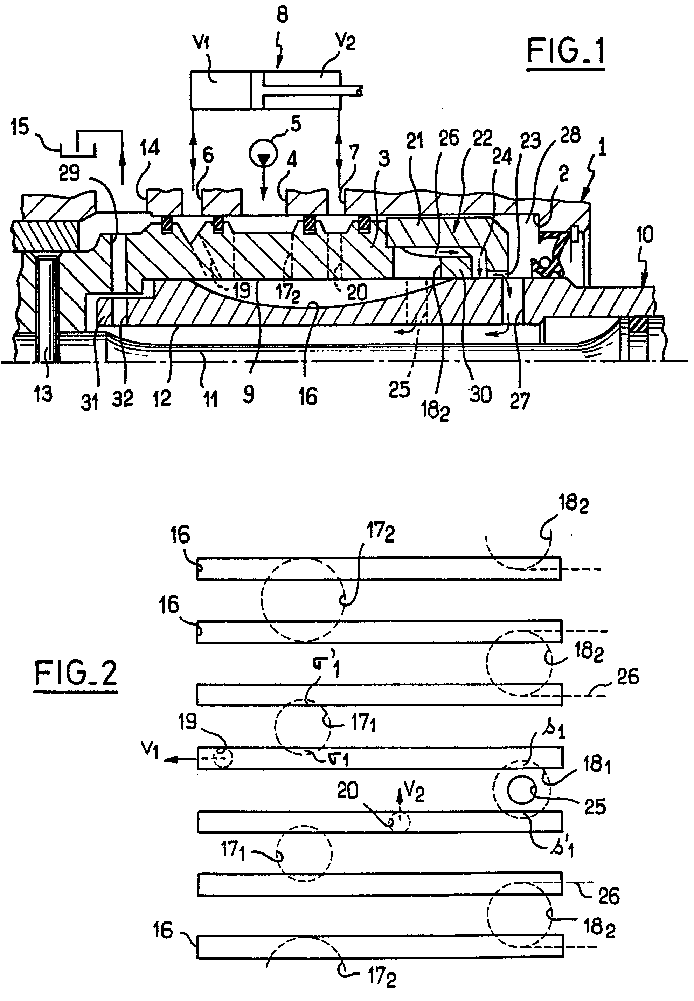

Le distributeur représenté sur la Figure 1, convenant tout particulièrement pour un système de servodirection de véhicule automobile, comprend généralement un boîtier de distributeur 1 comportant intérieurement un alésage 2 dans lequel est monté à rotation un élément de distributeur externe cylindrique 3 destiné à être relié, typiquement, à un pignon (non représenté) engrenant avec une crémaillère de direction. Le boîtier 1 comporte, débouchant dans l'alésage 2, un orifice d'admission 4 destiné à être relié à une source de fluide sous pression 5 et, de part et d'autre de l'orifice d'admission 4, des orifices de distribution 6 et 7 destinés à être reliés aux chambres opposées $V_1$ et $V_2$ d'un moteur hydraulique d'assistance 8. Les orifices 4, 6 et 7 débouchent dans l'alésage 2 en regard de gorges annulaires d'admission et de distribution séparées de façon étanche les unes des autres formées dans la périphérie externe de l'élément de distributeur externe 3. L'élément de distributeur externe 3 est formé avec un alésage intérieur 9 dans lequel est monté un élément de distributeur interne cylindrique ou rotor 10 destiné, typiquement, à être relié à un organe de commande du distributeur, tel qu'un volant de direction de véhicule (non représenté). L'élément de distributeur interne 10 est solidaire en rotation d'une extrémité d'une barre de torsion 11 s'étendant dans un logement longitudinal central 12 de l'élément de distributeur interne 10 et dont l'autre extrémité est solidarisée, par exemple par un pion 13, à l'élément de distributeur externe 3, dans un agencement classique permettant une rotation relative limitée des éléments de distributeur interne 10 et externe 3 l'un par rapport à l'autre pour distribuer sélectivement le fluide sous pression en provenance de la source 5 vers l'une ou l'autre des chambres $V_1$ et $V_2$ du moteur 8. Au voisinage de la zone de liaison entre l'élément de distributeur externe 3 et la barre de torsion 11 le boîtier 1 comporte à un orifice de retour 14 débouchant dans l'alésage 2 et destiné à être relié à un réservoir de fluide 15.

L'élément de distributeur interne 10 comporte, à sa périphérie, des rainures longitudinales angulairement réparties 16 fermées à leurs extrémités axialement opposées. Ces rainures 16 définissent ainsi entre elles des portées lisses externes de l'élément de distributeur interne 10 coopérant en contact coulissant rotatif avec l'alésage 9 de l'élément de distributeur externe 3. L'élément de distributeur externe 3 comporte une série d'orifices d'entrée traversants angulairement répartis $17_1$ et $17_2$ communiquant chacun, dans la position normale de repos ou position neutre du distributeur, avec deux rainures adjacentes 16 de l'élément de distributeur interne 10. Selon un aspect de l'invention, l'élément de distributeur externe 3 comporte un extrémité axiale amincie 30 dans laquelle sont formés, longitudinalement et angulairement décalés des orifices d'entrée $17_1$ et $17_2$, des évidements de retour $18_1$ et $18_2$ communiquant chacun, comme les orifices d'admission $17_1$ et $17_2$ dans la position neutre du distributeur, avec deux rainures adjacentes 16 de l'élément de distributeur interne 10. On comprendra que, de façon classique, les orifices $17_1$ et $17_2$ et les évidements $18_1$ et $18_2$ définissent ainsi avec les rainures 16 des sections de passage ou restrictions modulables en fonction de la rotation relative entre les éléments de distributeur interne 10 et externe 3 telles que figurées par $\sigma_1$, $\sigma'_1$ et $s_1$ et $s'_1$. L'élément de distributeur externe 3 comporte en outre des orifices de distribution traversants 19 et 20, tels que représentés, établissant une communication entre les gorges annulaires extérieures susmentionnées de l'élément de distributeur externe 3 et certaines des rainures longitudinales 16 de l'élément de distributeur interne 10.

Conformément à l'invention, sur l'extrémité amincie 30 de l'élément de distributeur externe 3 est emmanchée la partie de manchon cylindrique 21 d'un capuchon 22 dont le fond est formé avec un alésage central 23 de diamètre supérieur à celui de l'alésage 9 de façon à ménager, autour de l'élément de distributeur interne 10, un passage annulaire axial. La longueur axiale du capuchon 22 est déterminée de façon que, lorsque celui-ci est emmanché en butée sur l'élément de distributeur externe 3, il existe, entre l'extrémité axiale de ce dernier et le fond du capuchon 22, une chambre annulaire interne 24. Les orifices $17_1$ et $17_2$ ainsi que les évidements $18_1$ et $18_2$ sont typiquement constitués de perçages radiaux traversants. On comprendra, que, en ce qui concerne les orifices $18_1$, ceux-ci sont obturés extérieurement par la partie de manchon 21 du capuchon 22. Ces évidements $18_1$ communiquent toutefois avec le passage central 12 de l'élément de distributeur interne 10 par des passages radiaux 25 ménagés dans ce dernier et débouchant dans les portées lisses correspondant précisément à ces évidements $18_1$. Par contre, les évidements $18_2$ communiquent avec la chambre annulaire intérieure 24 par des passages axiaux 26 formés avantageusement par fraisage de l'extrémité amincie 30 de l'élément de distributeur externe 3. Au niveau de l'alésage 23, légèrement décalé axialement vers l'extérieur de ce dernier, au moins un passage radial 27 est ménagé dans l'élément de distributeur interne 10 pour établir une communication entre le passage interne 12 de ce dernier et la chambre 28 délimitée dans l'alésage 2 par le fond du capuchon 22. Le passage intérieur 12 de l'élément de distributeur interne 10 communique avec l'orifice de retour 14 du boîtier 1 par un passage radial traversant 29 de l'élément de distributeur externe 3. De façon avantageuse, l'élément de distributeur interne 10 comporte une extrémité amincie 31 s'étendant dans une portion de diamètre réduit de l'alésage 9 et formée elle-même avec un passage radial traversant 32 sensiblement aligné, en position neutre, avec le passage radial traversant 29 de l'élément de distributeur externe 3.

De préférence, comme on le voit sur la Figure 2, pour des raisons de symétrie et d'équilibre fonctionnel du distributeur, l'élément de distributeur externe comporte des orifices d'entrée répartis en deux séries de diamètres différents $17_1$ et $17_2$, les évidements de retour étant également répartis en deux séries d'évidements de diamètres différents $18_1$ et $18_2$. Typiquement, les évidements «borgnes» $18_1$ ont le même diamètre que les orifices d'entrée de petit diamètre $17_1$, les évidements de retour $18_2$, communiquant avec la chambre annulaire 24, ayant un diamètre intermédiaire entre celui des orifices d'entrée $17_1$ et des orifices d'entrée $17_2$.

**Revendications**

1. Distributeur hydraulique rotatif pour servomécanisme, notamment pour système de servodirection de véhicule, comprenant:
   – un élément de distributeur externe cylindrique (3) monté à rotation dans un alésage (2) d'un boîtier (1);
   – un élément de distributeur interne cylindrique (10) monté dans un alésage interne (9) de l'élément de distributeur externe (3) et susceptible d'une rotation relative limitée par rapport à ce dernier de part et d'autre d'une position relative neutre;
   Les éléments de distributeur comprenant des ouvertures et cavités définissant mutuellement un circuit de circulation de fluide connectable entre une source de fluide sous pression (5) et un réservoir (15) et incluant des passages de fluide à sections variables ($\sigma$, s) pour alimenter sélectivement en fluide sous pression les chambres opposées ($V_1$,$V_2$) d'un moteur hydraulique (8),
   l'élément de distributeur interne (3) comprenant à sa périphérie des rainures longitudinales (16) angulairement réparties,

l'élément de distributeur externe (3) comprenant des orifices d'entrée traversants (17₁, 17₂) et des évidements de retour (18₁, 18₂) débouchant respectivement en regard de portées lisses de l'élément de distributeur interne (10) entre deux rainures longitudinales adjacentes (16), et des orifices de distribution traversants (19; 20) communiquant normalement avec des rainures correspondantes parmi les rainures longitudinales (16) de l'élément de distributeur interne (10),

caractérisé en ce que les évidements de retour (18₁, 18₂) sont décalés longitudinalement et angulairement des orifices d'entrée (17₁, 17₂), des premiers (18₂) parmi ces évidements de retour communiquant en permanence avec une chambre annulaire (24) en bout de l'élément de distributeur externe (3) délimitée intérieurement par l'élément de distributeur interne (10), via des conduits de retour (26) définis au moins partiellement dans l'élément de distributeur externe (3).

2. Distributeur selon la revendication 1, caractérisé en ce que les évidements de retour (18₁, 18₂) sont constitués de passages radiaux formés dans un extrémité amincie (30) de l'élément de distributeur externe (3) sur laquelle est rapporté extérieurement un manchon cylindrique (21).

3. Distributeur selon la revendication 2, caractérisé en ce que le manchon (21) fait partie d'un capuchon (22) en forme de coupelle coiffant l'extrémité amincie (30) de l'élément de distributeur externe (3) et définissant partiellement, intérieurement, lesdits conduits de retour (26).

4. Distributeur selon la revendication 3, caractérisé en ce que le capuchon (22) définit intérieurement une chambre annulaire (24) communiquant en permanence avec lesdits premiers évidements (18₂) et avec une chambre (28) définie dans l'alésage (2) du boîtier (1).

5. Distributeur selon la revendication 4, caractérisé en ce que la chambre (28) du boîtier (1) communique avec un orifice de retour (14) du boîtier (1) via un passage central longitudinal (9) et des passages radiaux (27, 32) de l'élément de distributeur interne (10).

6. Distributeur selon la revendication 5, caractérisé en ce que des seconds (18₁) parmi les évidements de retour sont borgnes et communiquent avec le passage longitudinal central (12) de l'élément de distributeur interne (10) par des passages radiaux (25) formés dans ce dernier et débouchant sur lesdites portées lisses correspondant à ces seconds évidements de retour (18₁).

7. Distributeur selon la revendication 6, caractérisé en ce que les seconds évidements de retour (18₁) ont un diamètre inférieur à celui des premiers évidements de retour (18₂).

**Claims**

1. A rotary hydraulic distributor for a servomechanism, particularly for a vehicle servo-steering system, comprising:
   - an outer cylindrical distributor component (3) mounted so as to rotate in a bore (2) of a casing (1);

   - an inner cylindrical distributor component (10) mounted in an internal bore (9) of the outer distributor component (3) and capable of limited rotation relative to the latter each side of a relative neutral position; the distributor components incorporating openings and cavities which mutually define a fluid circulation circuit capable of being connected between a source of fluid under pressure (5) and a reservoir (15) and including fluid passages with variable cross-sections (σ, s) so as to supply selectively the opposing chambers (V₁, V₂) of a hydraulic actuator (8) with fluid under pressure,

   the inner distributor component (10) incorporating at its periphery longitudinal grooves (16) which are angularly spaced, the outer distributor component (3) incorporating inlet through holes (17₁, 17₂) and return openings (18₁, 18₂) opening respectively facing smooth bearing surfaces of the inner distributor component (10) between two adjacent longitudinal grooves (16), and distribution through holes (19; 20) normally communicating with corresponding grooves among the longitudinal grooves (16) of the inner distributor component (10),

   characterized in that the return openings (18₁, 18₂) are offset longitudinally and angularly from the inlet holes (17₁, 17₂), certain first openings (18₂) among these return openings communicating permanently with an annular chamber (24) at the end of the outer distributor component (3) bounded internally by the inner distributor component (10), via return passages (26) defined as least partially within the outer distributor component (3).

2. Distributor according to claim 1, characterised in that the return openings (18₁, 18₂) consist of radial passages formed in one end of reduced diameter (30) of the outer distributor component (3) to which a cylindrical sleeve (21) is attached externally.

3. Distributor according to claim 2, characterized in that the sleeve (21) forms part of a cap (22) in the shape of a cup covering the end of reduced diameter (30) of the outer distributor component (3) and partially defining internally the said return passages (26).

4. Distributor according to claim 3, characterized in that the cap (22) defines internally an annular chamber (24) communicating permanently with the said first openings (18₂) and with a chamber (28) defined in the bore (2) of the casing (1).

5. Distributor according to claim 4, characterized in that the chamber (28) of the casing (1) communicates with a return hole (14) of the casing (1) via a central longitudinal passage (9) and radial passages (27, 32) of the inner distributor component (10).

6. Distributor according to claim 5, characterized in that second openings (18₁) among the return openings are blind and communicate with the central longitudinal passage (12) of the inner distributor component (10) through radial passages (25) formed in the latter and opening onto the said smooth bearing surfaces corresponding to these second return openings (18₁).

7. Distributor according to claim 6, characterized in that the second return openings ($18_1$) have a smaller diameter than that of the first return openings ($18_2$).

**Patentansprüche**

1. Hydraulischer Drehverteiler für einen Servomechanismus, insbesondere für eine Kraftfahrzeug-Servolenkanlage, mit:
- einem äusseren zylindrischen Verteilerelement (3), das in einer Bohrung (2) eines Gehäuses (1) drehbar gelagert ist;
- einem inneren zylindrischen Verteilerelement (10), das in einer Innenbohrung (9) des äusseren Verteilerelementes (3) gelagert ist und bezüglich dieses Verteilerelementes eine begrenzte Relativdrehung beidseitig zu einer relativen Nullstellung ausführen kann;
wobei die Verteilerelemente Öffnungen und Ausnehmungen zur Bildung eines Strömungsmittelkreises aufweisen, der zwischen einer Druckmittelquelle (5) und einem Reservoir (15) schaltbar ist und Strömungskanäle veränderlichen Querschnitts ($\sigma$, s) enthält, um die entgegengesetzten Kammern ($V_1$, $V_2$) eines hydraulischen Motors (8) mit Druckmittel zu versorgen,
wobei das innere Verteilerelement (3) an seinem Umfang in Umfangsrichtung verteilte Längsnuten (16) aufweist, wobei das äussere Verteilerelement (3) quer verlaufende Einlassöffnungen ($17_1$, $17_2$) sowie Rückführausnehmungen ($18_1$, $18_2$) aufweist, die jeweils gegenüber glatten Bereichen des inneren Verteilerelementes (10) zwischen zwei benachbarten Längsnuten (16) münden, sowie quer verlaufende Verteileröffnungen (19; 20), die normalerweise mit entsprechenden Nuten aus den Längsnuten (16) des inneren Verteilerelementes (10) in Verbindung stehen, dadurch gekennzeichnet, dass die Rückführausnehmungen ($18_1$, $18_2$) gegenüber den Einlassöffnungen ($17_1$, $17_2$) in Längs- und Umfangsrichtung versetzt sind, wobei erste Rückführausnehmungen ($18_2$) dauernd mit einer auf der Innenseite von dem inneren Verteilerelement (10) begrenzten Ringkammer (24) am Ende des äusseren Verteilerelementes über Rückführkanäle (26) verbunden sind, die zumindest teilweise in dem äusseren Verteilerelement (3) gebildet sind.

2. Verteiler nach Anspruch 1, dadurch gekennzeichnet, dass die Rückführausnehmungen ($18_1$, $18_2$) von radialen Kanälen gebildet werden, die in einem verdünnten Ende (30) des äusseren Verteilerelementes (3) gebildet sind, auf das von aussen eine zylindrische Hülse (21) aufgesetzt ist.

3. Verteiler nach Anspruch 2, dadurch gekennzeichnet, dass die Hülse (21) Teil einer schüsselförmigen Kappe (22) bildet, die das verdünnte Ende (30) des äusseren Verteilerelementes (3) übergreift und im Inneren teilweise die besagten Rückführkanäle (26) bildet.

4. Verteiler nach Anspruch 3, dadurch gekennzeichnet, dass die Kappe (22) im Inneren eine Ringkammer (24) bildet, die dauernd mit den ersten Ausnehmungen ($18_2$) und mit einer in der Bohrung (2) des Gehäuses (1) gebildeten Kammer (28) in Verbindung steht.

5. Verteiler nach Anspruch 4, dadurch gekennzeichnet, dass die Kammer (28) des Gehäuses (1) mit einer Rückführöffnung (14) des Gehäuses (1) über einen zentralen Längskanal (9) und radiale Kanäle (27, 32) des inneren Verteilerelementes (10) in Verbindung steht.

6. Verteiler nach Anspruch 5, dadurch gekennzeichnet, dass zweite Rückführausnehmungen ($18_1$) als Sacklöcher ausgebildet sind und mit dem zentralen Längskanal (12) des inneren Verteilerelementes (10) über radiale Kanäle (25) verbunden sind, die in dem letzteren gebildet sind und an den glatten Bereichen entsprechend diesen zweiten Rückführausnehmungen ($18_1$) münden.

7. Verteiler nach Anspruch 6, dadurch gekennzeichnet, dass die zweiten Rückführausnehmungen ($18_1$) einen Durchmesser haben, der kleiner ist als der der ersten Rückführausnehmungen ($18_2$).

FIG.1

FIG.2